# EUROPEAN PATENT APPLICATION

(11) **EP 4 769 772 A1**
(43) Date of publication of application: **01.07.2026**
(21) Application number: 25822414.6
(22) Date of filing: 29.05.2025
(51) Int. Cl.: H01M 50/383, H01M 50/367, H01M 50/342, H01M 50/291, H01M 50/249

(54) **BATTERY PACK AND VEHICLE INCLUDING SAME**

(30) Priority: 10.06.2024 KR 20240075249
(71) Applicant: LG Energy Solution, Ltd., Seoul 07335 (KR)
(72) Inventor: LEE, Jung-Hoon, Daejeon 34122 (KR); KIM, Kwang-Mo, Daejeon 34122 (KR); JUNG, Hye-Mi, Daejeon 34122 (KR)
(74) Representative: Plasseraud IP
(86) International application number: PCT/KR2025/007361
(87) International publication number: WO 2025/258896

(57) **Abstract**

The present disclosure relates to a battery pack including: a plurality of battery modules having a plurality of battery cells; a pack case configured to store the plurality of battery modules; and a blocking unit provided between the battery module and the pack case and configured to block movement of venting gas discharged from the battery cells toward one or more other battery modules.

## Description

### TECHNICAL FIELD

The present disclosure relates to a battery pack and a vehicle including the same.

This application is based on and claims priority from Korean Patent Application No. 10-2024-0075249, filed on June 10, 2024, with the Korean Intellectual Property Office, the disclosure of which is incorporated herein in its entirety by reference.

### BACKGROUND ART

Secondary batteries, which offer high applicability across product categories and possess electrical characteristics such as high energy density and the like, are widely applied not only to portable devices but also to electric vehicles (EVs) or hybrid electric vehicles (HEVs) that are driven by electric power sources. Such secondary batteries are gaining attention as a new energy source for enhancing environmental sustainability and energy efficiency not only due to their primary advantage of significantly reducing the use of fossil fuels, but also because they generate no by-products from energy usage.

Secondary batteries that are currently widely used include lithium-ion batteries, lithium polymer batteries, nickel-cadmium batteries, nickel-metal hydride batteries, and nickel-zinc batteries. When high output voltage is required, multiple battery cells may be connected in series to form a battery module or battery pack. In addition, to increase charge/discharge capacity, multiple battery cells may be connected in parallel to configure a battery module or battery pack. Accordingly, the number of battery cells included in the battery module or pack may be variously configured depending on the required output voltage or charge/discharge capacity.

Meanwhile, since a battery cell involves a chemical reaction during charging and discharging, its performance may deteriorate when used in environments exceeding the appropriate temperature. Moreover, if thermal control is not properly maintained at the appropriate temperature, there remains a potential risk of unexpected ignition or explosion. Therefore, if a thermal event such as thermal runaway occurs in the battery pack including multiple battery modules, the high-temperature gas and flame ejected from the battery cells included therein may propagate to adjacent battery modules, leading to a chain reaction of battery module explosions, which poses a significant safety risk.

Conventionally, high-temperature gas or flames are discharged through a venting hole provided on the top of the battery module and guided to the outside of the pack case through the space between the pack case and the battery module. However, in this case, there is a problem that high-temperature gas or flames could be discharged or moved in all directions through the space between the pack case and the battery module, causing thermal damage to other adjacent battery modules.

Therefore, there is a need to develop a structure capable of, when thermal runaway occurs in a battery module, suppressing the spread of high-temperature gases or flames generated inside the battery module to other battery modules, thereby preventing thermal propagation between the battery modules.

### DISCLOSURE

### Technical Problem

The present disclosure is designed to solve the problems of the related art, and therefore the present disclosure is directed to providing a battery pack with improved safety and reliability by minimizing the thermal energy transferred to adjacent battery modules when thermal runaway occurs in a battery module, thereby preventing or suppressing thermal runaway propagation between the battery modules.

In addition, the present disclosure is also to provide a vehicle that includes such a battery pack.

However, the technical problems that the present disclosure seeks to solve are not limited to the above-mentioned problems, and other problems not mentioned above will be clearly understood by those skilled in the art from the description of the invention described below.

### Technical Solution

In one aspect of the present disclosure, there is provided a battery pack including: a plurality of battery modules having a plurality of battery cells; a pack case configured to store the plurality of battery modules; and a blocking unit provided between the battery module and the pack case and configured to block movement of venting gas discharged from the battery cells toward one or more other battery modules.

The battery module may include an electrode terminal provided on its front surface and configured to be electrically connected to the battery cells, and the blocking unit may be configured to suppress movement of the venting gas toward the electrode terminal.

The battery module may include a module case configured to store the plurality of battery cells and having a venting hole formed on its one side.

The blocking unit may be provided in a space between an upper side of the pack case and the module case.

The blocking unit may be configured to suppress upward movement of the module case from above the module case.

The blocking unit may be configured to come into contact with an inner surface of the pack case.

The blocking unit may be configured to extend in a widthwise direction of the battery module.

The blocking unit may include a first unit and a second unit respectively located on both sides of the battery module.

The pack case may include a cross-beam interposed between adjacent battery modules and configured to extend further upward than the battery module.

The blocking unit may be coupled to an upper end of the cross-beam.

The blocking unit may include an outer member provided on an outer side of the battery module and configured to be coupled to the pack case, and an inner member provided between the outer member and the battery module.

The outer member may be configured in a bent shape to have a horizontal portion and a vertical portion.

The inner member may be configured to be interposed between the outer member and the battery module in a compressed state.

The inner members may be provided as a pair for each battery module and disposed on both sides of the battery module in its longitudinal direction.

In another aspect of the present disclosure, there is provided a vehicle including a battery pack according to the present disclosure.

### Advantageous Effects

According to one aspect of the present disclosure, since the blocking unit is provided between the battery module and the pack case, it is possible to block the movement of venting gas discharged from the battery module toward another battery module. Accordingly, when thermal runaway occurs in the battery module, the thermal energy transferred to adjacent battery modules can be minimized. As a result, the propagation of thermal runaway between the battery modules can be prevented or suppressed, thereby ensuring the safety and reliability of the battery pack.

In particular, according to one aspect of the present disclosure, when thermal runaway occurs in the battery module, it is possible to suppress the movement of venting gas or flames toward the terminal of the battery module.

In addition, according to another aspect of the present disclosure, when thermal runaway occurs in the battery module, the upper side of the module case can be prevented from expanding upward. As a result, it is possible to secure a discharge path to the outside of the battery pack, thereby minimizing heat accumulation inside the battery pack.

In addition, according to another aspect of the present disclosure, it is possible to prevent or delay an event, such as a fire or explosion, due to thermal runaway of the battery pack or a device equipped with the battery pack.

In addition, the present disclosure may have various other effects, and these will be described in the respective embodiments, or description of effects that may be easily inferred by those skilled in the art will be omitted.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is an overall perspective view of a battery pack according to an embodiment of the present disclosure.
FIG. 2 is an exploded perspective view of a battery pack according to an embodiment of the present disclosure.
FIG. 3 is an enlarged view of part A in FIG. 2, which illustrates a blocking unit included in a battery pack according to an embodiment of the present disclosure.
FIG. 4 is an exploded perspective view of a battery module included in a battery pack according to an embodiment of the present disclosure.
FIG. 5 is a cross-sectional view of a battery pack according to an embodiment of the present disclosure, which may be a cross-sectional view taken along, for example, line I - I' in FIG. 1.
FIG. 6 is a drawing illustrating a blocking unit suppressing an upward deformation of a module case during thermal runaway in a battery pack according to an embodiment of the present disclosure.
FIG. 7 is a drawing illustrating a blocking unit suppressing an upward deformation of a module case during thermal runaway in a battery pack according to another embodiment of the present disclosure.
FIG. 8 is a top view of a battery pack according to an embodiment of the present disclosure.
FIG. 9 is a drawing illustrating a combined structure of a blocking unit and a pack case included in a battery pack according to an embodiment of the present disclosure.
FIG. 10 is a drawing illustrating a structure of a blocking unit included in a battery pack according to an embodiment of the present disclosure.
FIG. 11 is a partially exploded perspective view of a battery pack according to an embodiment of the present disclosure.
FIG. 12 is a perspective view illustrating the inside of a battery pack according to an embodiment of the present disclosure.
FIG. 13 is a perspective view illustrating the inside of a battery pack according to another embodiment of the present disclosure.
FIG. 14 is a cross-sectional view of a battery pack according to another embodiment of the present disclosure.
FIG. 15 is a schematic perspective view of a vehicle including a battery pack according to an embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, and does not represent the entire scope of the disclosure, so it should be understood that other equivalents and modifications could be made thereto without departing from the scope of the disclosure at the time of filing the present disclosure.

In addition, the present disclosure may include various embodiments. Redundant descriptions of substantially the same or similar configurations will be omitted from respective embodiments, and a description will be made based on differences therebetween.

Meanwhile, although terms indicating directions such as up(ward), down(ward), left, right, front, and back are used in this specification, it is obvious to those skilled in the art to which the present disclosure pertains that these terms are only for convenience of explanation with reference to the relevant drawings and may vary depending on the position of the target object or the position of the observer.

For example, in the embodiment of the present disclosure, the X-axis direction shown in the drawing may indicate a left-right direction, the Y-axis direction may indicate a front-back direction perpendicular to the X-axis direction on the horizontal plane (X-Y plane), and the Z-axis direction may indicate an up-down direction (vertical direction) perpendicular to both the X-axis direction and the Y-axis direction.

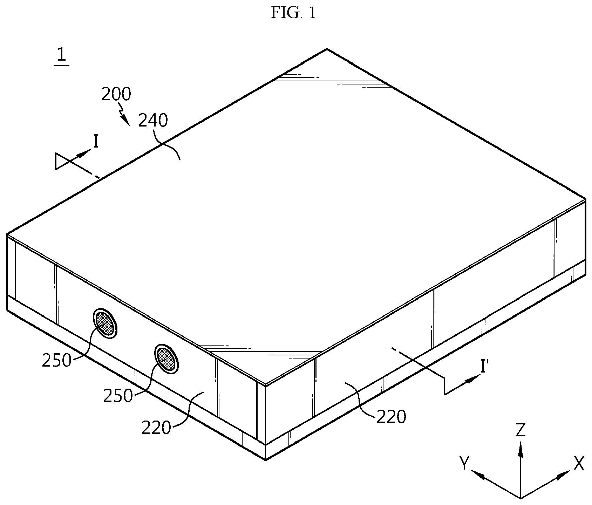

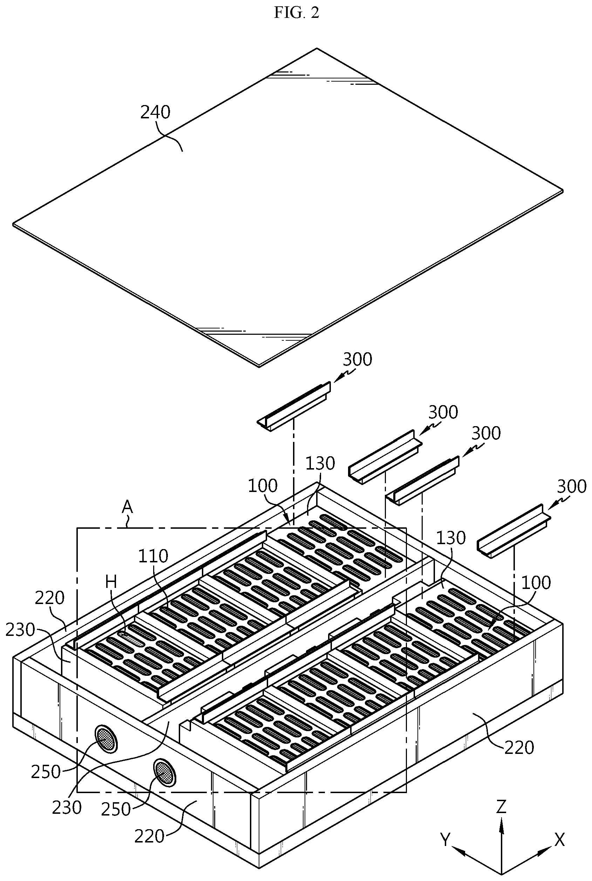

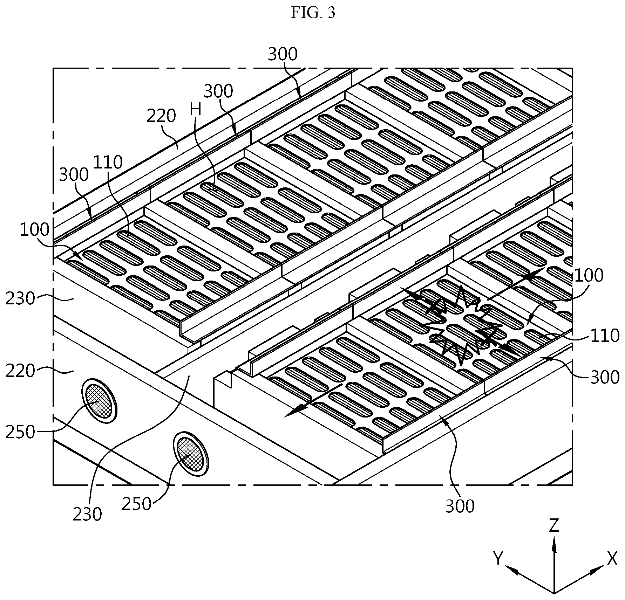

FIG. 1 is an overall perspective view of a battery pack according to an embodiment of the present disclosure, and FIG. 2 is an exploded perspective view of a battery pack according to an embodiment of the present disclosure. In addition, FIG. 3 is an enlarged view of part A in FIG. 2, which illustrates a blocking unit included in a battery pack according to an embodiment of the present disclosure.

Referring to FIGS. 1 to 3, a battery pack 1 according to an embodiment of the present disclosure includes a battery module 100, a pack case 200, and a blocking unit 300.

The battery module 100 may include battery cells 110. The battery cell 110 may include an electrode assembly, a cell case that stores the electrode assembly, and an electrode lead that is connected to the electrode assembly and extends outward from the cell case to function as an electrode terminal. In this case, a plurality of battery cells 110 may be electrically connected to each other.

The present disclosure is not limited to a specific type or shape of the battery cell 110, and various battery cells 110 known at the time of filing the present disclosure may be applied to configure the battery pack 1 of the present disclosure. In the present embodiment, although a pouch-type secondary battery with high energy density and easy stacking will be described as shown in the drawing, it is obvious that a cylindrical or prismatic secondary battery may also be applied to the battery cell 110.

A plurality of battery cells 110 may be included in the battery module 100. The plurality of battery cells 110 may be disposed in parallel in the front-back direction (X-axis direction) while standing in a vertical direction (Z-axis direction). That is, the battery module 100 may indicate an assembly of a plurality of battery cells 110.

The pack case 200 may be configured to store the battery module 100. The pack case 200 may have a storage space configured to store the battery module 100. The storage space is an empty space and may be configured in a shape capable of storing the battery module 100.

In this case, a plurality of battery modules 100 may be provided. The plurality of battery modules 100 may be arranged in multiple rows to be adjacent to each other along at least one direction in the storage space of the pack case 200. For example, as shown in FIG. 2, the plurality of battery modules 100 may be arranged in four rows along the front-back direction (X-axis direction) and in two rows along the left-right direction (Y-axis direction).

The pack case 200 may be made of a material capable of securing mechanical strength, such as metal, for example, steel or SUS, or plastic, or may include such a material in order to safely protect the battery modules 100 stored therein.

Referring to FIG. 2 and FIG. 3, the battery pack 1 according to an embodiment of the present disclosure may include a blocking unit 300. The blocking unit 300 may be configured to block the movement of the venting gas discharged from the battery cell 110 toward one or more other battery modules 100. That is, the venting gas or the like may be prevented from moving over the blocking unit 300 to another battery module 100. For example, as indicated by the bold arrows in FIG. 3, the blocking unit 300 may be configured to block the movement of the venting gas or the like toward the battery modules 100 disposed in the left-right direction.

More specifically, referring to FIG. 2 and FIG. 3, the blocking unit 300 may be provided outside the battery module 100. For example, the blocking unit 300 may be disposed on top of the battery module 100. Furthermore, the blocking unit 300 may be provided between the battery module 100 and the pack case 200. That is, a predetermined space may be provided between the battery module 100 and the pack case 200, and the blocking unit 300 may be provided in the space.

The blocking unit 300 may be made of a material having fire resistance and/or heat resistance. For example, the blocking unit 300 may be made of a material such as silicone, polyurethane, SUS, or mica. However, the material of the blocking unit 300 is not limited thereto.

According to the above-implemented configuration of the present disclosure, the blocking unit 300 may be configured such that the outer space and the inner space of the area where the blocking unit 300 is provided are separated by the same. Accordingly, the discharges generated from the battery module 100 may flow only on the inner side of the blocking unit 300. Here, the discharges may indicate all substances, such as venting gases, flames, or sparks, discharged when a thermal event occurs in the battery module 100.

That is, according to the above-implemented configuration of the present disclosure, even if a thermal event occurs in a battery module 100, the venting gas or flame may be prevented from moving to other battery modules 100 by the blocking unit 300, thereby minimizing direct thermal damage to other battery modules 100. Therefore, since thermal propagation between the battery modules 100 is minimized, the safety and reliability of the battery pack 1 may be ensured.

Referring to FIGS. 2 and 3, the battery module 10 according to an embodiment of the present disclosure may further include an electrode terminal 120. The electrode terminal 120 may be configured to be electrically connected to the battery cells 110. In particular, the electrode terminal 120 may be configured to be electrically connected to the electrode lead of the battery cell 110. The electrode terminal 120 may include a positive electrode terminal and a negative electrode terminal. In addition, the electrode terminal 120 may be configured to be electrically or communicatively connected to a control device such as a BMS.

The electrode terminal 120 may be provided on the side from which the electrode lead of the battery cell 110 extends outward. For example, the electrode terminal 120 may be provided on the front side of the module frame 200. In addition, as disclosed in the embodiment illustrated in FIG. 2, a plurality of battery modules 100 may be provided so that their front sides where the electrode terminals 120 are provided face each other inside the pack case 200. As a result, the plurality of battery modules 100 may be electrically connected to each other. To this end, a device such as a bus-bar for connecting the battery modules 100 may be provided on the front side of the battery module 100 (the inner side of the pack case 200).

In this case, the blocking unit 300 may be configured to suppress the movement of the venting gas toward the electrode terminal 120. The blocking unit 300 may be provided further inward than the electrode terminal 120 in the battery module 100. That is, the venting gas generated from the battery cell 110 in the battery module 100 may be prevented from moving over the blocking unit 300 to the outer space of the blocking unit 300 where the electrode terminal 120 is provided.

According to the above-implemented configuration of the present disclosure, since the blocking unit 300 is configured to protect the electrode terminal 120, it is possible to minimize the movement of the high-temperature venting gas or flames toward the electrode terminal 120 of the battery module 10 in the event of an abnormality of an adjacent battery module 10. Accordingly, even if a thermal event occurs in the battery pack 1, a control device of the battery pack 1 may operate to ensure the safety of the user.

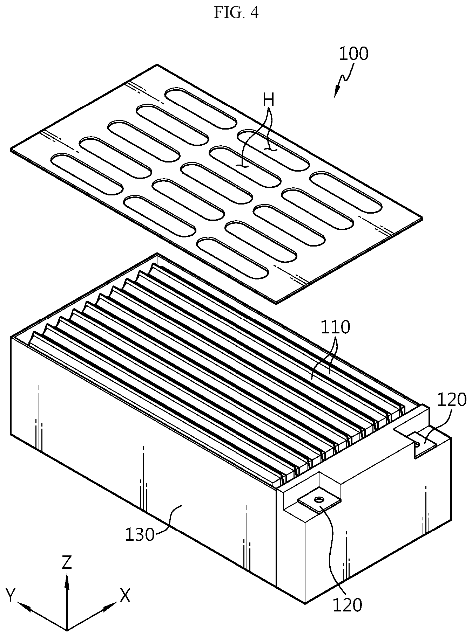

FIG. 4 is an exploded perspective view of a battery module included in a battery pack according to an embodiment of the present disclosure.

Referring to FIG. 4, the battery module 100 according to an embodiment of the present disclosure may have a module case 130. The module case 130 may be configured to have an empty space formed therein and store at least some of the plurality of battery cells 110 in the inner space. That is, the module case 130 may be a boundary that groups the plurality of battery cells 110 into several battery modules 100 and physically confines the inner space of each battery module 100.

Meanwhile, although the module case 130 is provided in the present embodiment, unlike the present embodiment, the plurality of battery modules 100 may not have the module case 130, so the physical boundary between the plurality of battery cells 110 may not be delimited.

A venting hole H may be formed in the module case 130. The venting hole H may be configured to allow gas generated from the battery cells 110 stored inside the module case 130 to be discharged to the outside of the module case 130.

Specifically, the venting hole H may be configured to enable directional venting to a specific direction. For example, as illustrated in FIG. 4, a venting hole H may be formed in the upper side of the module case 130, and directional venting of the battery module 100 may be performed toward the top through the venting hole H. A plurality of venting holes H may be provided at regular intervals in the horizontal direction (X-axis and Y-axis directions).

According to the above-implemented configuration of the present disclosure, in a situation where one of the battery cells 110 undergoes thermal runaway and generates gas or the like, the gas or the like may be quickly vented in a specific direction from the module case 130.

In addition, although not illustrated in the drawing, the battery module 100 may include a bus-bar assembly electrically connected to a plurality of battery cells 110 stored therein. In addition, the electrode terminal 120 may be configured to be at least partially exposed through the front side of the module case 130.

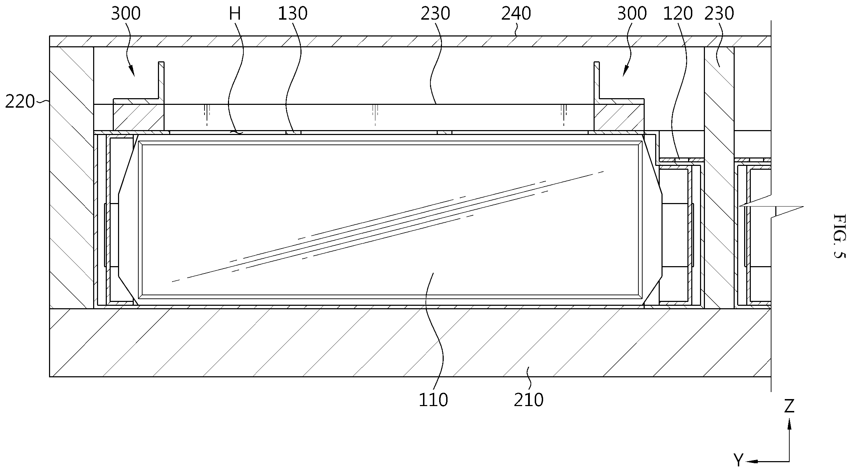

FIG. 5 is a cross-sectional view of a battery pack according to an embodiment of the present disclosure, which may be a cross-sectional view taken along, for example, line I - I' in FIG. 1.

Referring to FIG. 2 and FIG. 5, the pack case 200 may include a base frame 210, a side frame 220, and a pack lid 240.

The base frame 210 may form the bottom surface of the pack case 200 and may be configured in the form of a square plate. In addition, the base frame 210 may be configured so that a plurality of battery cells 110 are seated on its upper surface. Furthermore, the base frame 210 may have a flat upper surface so that a plurality of battery modules 100 may be stably seated thereon.

The side frame 220 may extend upward from respective edges of the base frame 210. The side frame 220 may have a plurality of unit walls to surround the plurality of battery cells 110 or the plurality of battery modules 10. More specifically, the plurality of side frames 220 may have a right wall located at an end of the base frame 210 to the -Y-axis direction, a rear wall located at an end to the +X-axis direction, a left wall located at an end to the +Y-axis direction, and a front wall located at an end to the -X-axis direction, respectively, to form the side surfaces of the pack case 200.

The pack lid 300 may be configured to cover the top of the plurality of battery modules 100. The pack lid 300 may be configured to cover an upper opening of the pack case 200. The pack lid 300 may be coupled to the side frame 220. The pack lid 300 may protect components stored inside the pack case 200, such as the battery modules 100, and prevent the discharges released from the battery modules 100 from being discharged to the outside of the pack case 200, particularly, to the upper portion.

Referring to FIG. 5, the blocking unit 300 may be provided in the space between the upper side of the pack case 200 and the module case 130. That is, the blocking unit 300 may be interposed between the pack lid 240 and the module case 130.

Specifically, a space may exist between the pack lid 240 and the module case 130. Therefore, gas discharged upward through the venting hole H of the battery module 100 may move to other battery modules 100 through the space between the pack lid 240 and the module case 130.

However, according to the above-implemented configuration of the present disclosure, the blocking unit 300 may be provided in the space between the pack lid 240 and the module case 130 to block its movement toward other battery modules 100. Therefore, even if a thermal event occurs in a battery module 100, the blocking unit 300 may prevent venting gas or flame from moving toward other battery modules 100, thereby minimizing the direct thermal damage to the other battery modules 100.

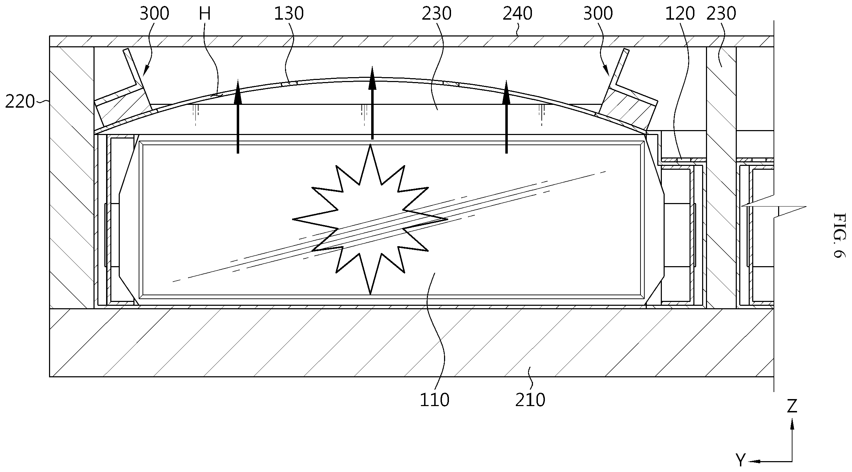

FIG. 6 is a drawing illustrating a blocking unit suppressing an upward deformation of a module case during thermal runaway in a battery pack according to an embodiment of the present disclosure.

The blocking unit 300 may be configured to limit the separation distance between the battery module 100 and the module cover 310. The blocking unit 300 may be configured to suppress the upward movement of the module case 130 in the upper portion of the module case 130.

When a thermal event occurs inside the battery module 100, the upper part of the module case 130 may expand outward as the pressure inside the battery module 100 increases. In this case, the space between the upper side of the module case 130 and the pack lid 240 fails to keep the distance constant, thereby interrupting smooth movement of the venting gas discharged through the venting hole H.

However, according to the above embodiment of the present disclosure, since the blocking unit 300 is provided between the battery module 100 and the pack lid 240, when a thermal event occurs in the battery module 100, the blocking unit 300 above the battery module 100 may pressurize and fix the battery module 100. As a result, the battery module 100 may be prevented from expanding upward.

As a more specific example, the blocking unit 300 may be configured to act as a stopper when a thermal event occurs in the battery module 100 and the upper side of the module case 130 expands upward. As disclosed in the embodiment illustrated in FIG. 5, the blocking unit 300 may be configured to be spaced apart from the pack lid 240. In addition, as disclosed in the embodiment illustrated in FIG. 6, when a thermal event occurs in the battery module 100, the upper side of the module case 130 may expand, so that the upper end of the blocking unit 300 may come into contact with the pack lid 240.

In this case, the blocking unit 300 may be made of, at least in part, a compressible material. Accordingly, when the upper side of the module case 130 expands, the blocking unit 300 may be pressurized by the module case 130.

According to the above-implemented configuration of the present disclosure, the blocking unit 300 may allow a certain level of expansion of the upper side of the module case 130, while suppressing excessive expansion thereof.

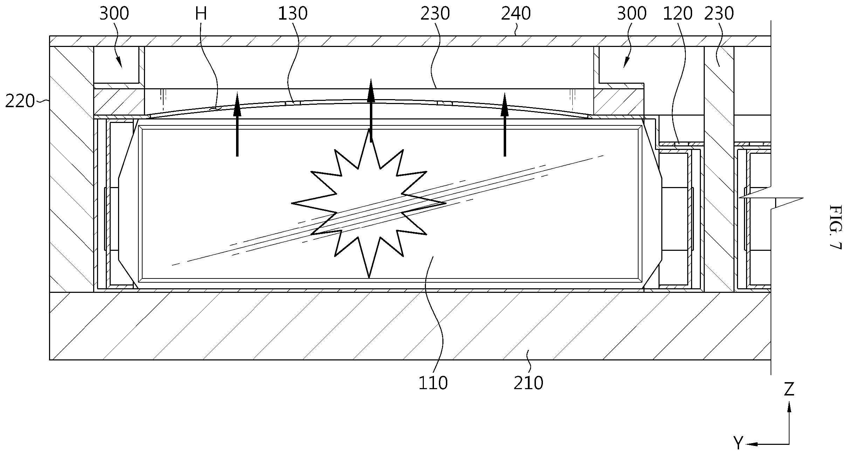

FIG. 7 is a drawing illustrating a blocking unit suppressing an upward deformation of a module case during thermal runaway in a battery pack according to another embodiment of the present disclosure.

As another embodiment, the blocking unit 300 may be configured to come into contact with the inner surface of the pack case 200. That is, the blocking unit 300 may be provided to be seated on the battery module 100. In addition, the pack lid 240 may be configured to be seated on the blocking unit 300. That is, the height of the blocking unit 300 may be configured to be approximately equal to the distance between the pack lid 240 and the battery module 100.

In addition, as disclosed in the embodiment illustrated in FIG. 7, even if the upper side of the module case 130 expands when a thermal event occurs in the battery module 100, the blocking unit 300 may be configured to be pressurized, thereby suppressing the expansion of the module case 130.

According to the above-implemented configuration of the present disclosure, since the blocking unit 300 structurally supports the pack lid 240, the pack lid 240 may be prevented from sagging by gravity. In addition, the module case 130 may be prevented from bulging more reliably.

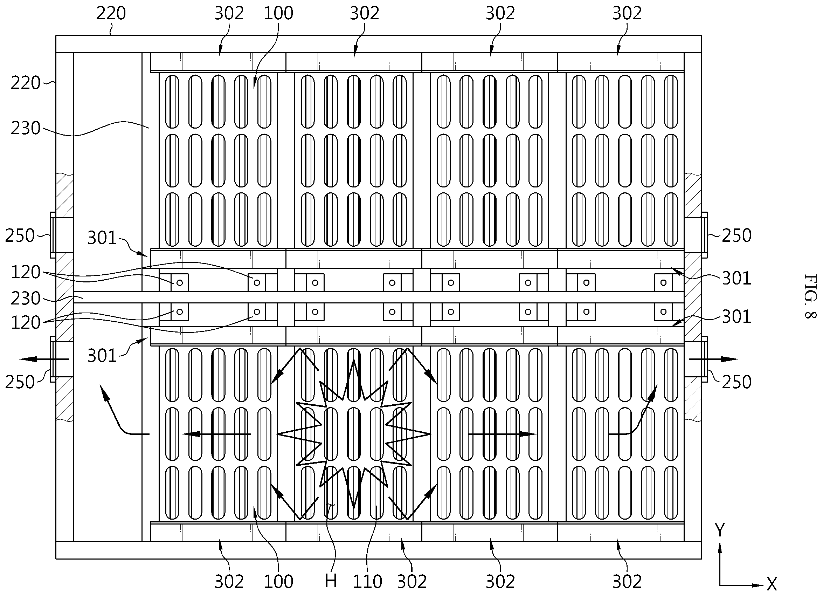

FIG. 8 is a top view of a battery pack according to an embodiment of the present disclosure.

Referring to FIG. 8, the blocking unit 300 may be configured to extend in the widthwise direction of the battery module 100. That is, the blocking unit 300 may be configured to extend in the stacking direction of the battery cells 110. The length of the blocking unit 300 may be configured to be approximately equal to the width of the battery module 100.

According to the above-implemented configuration of the present disclosure, it is possible to completely block the movement of the venting gas over the blocking unit 300 to another adjacent battery module 100 along the longitudinal direction of the battery module 100.

In addition, a plurality of blocking units 300 may be provided for each battery module 100. For example, as disclosed in the embodiment illustrated in FIG. 8, two blocking units 300 may be provided for each battery module 100. The plurality of blocking units 300 may be located on both sides of the battery module 100.

Specifically, the blocking unit 300 may include a first unit 301 and a second unit 302. The first unit 301 may be provided on one side of the battery module 100, and the second unit 302 may be provided on the other side of the battery module 100. The first unit 301 and the second unit 302 may be disposed to be spaced apart from each other in the front-back direction (Y-axis direction in FIG. 8) of the battery module 100.

The blocking unit 300 may be disposed on both sides of the venting holes H. That is, the first unit 301 and the second unit 302 may be provided on the outer side of the venting holes H. In this case, the blocking unit 300 may be configured so as not to overlap the venting hole H.

Furthermore, referring to FIG. 8, a plurality of blocking units 300 may be configured to extend in at least one direction. That is, the plurality of blocking units 300 may be provided on the outer side of the venting holes H so as to extend in at least one direction. For example, the plurality of blocking units 300 may be configured to extend in the stacking direction of the battery cell 110 (the X-axis direction in FIG. 8). That is, the plurality of blocking units 300 may be configured to extend along the front-back direction of the battery pack 1.

More specifically, a plurality of first units 301 and a plurality of second units 302 may be provided. The plurality of first units 301 and the plurality of second units 302 may be disposed along the stacking direction of the battery cells 110, respectively. In particular, adjacent first unit 301 and second unit 302 may be configured to be connected to each other while being in contact with each other. That is, the first unit 301 and the second unit 302 may each extend along the widthwise direction of the battery module 100, and a plurality of first units 301 and second units 302 may be arranged along the front-back direction (X-axis direction in FIG. 8) of the pack case 200.

Accordingly, the plurality of first units 301 and the plurality of second units 302 may be arranged in a single row, respectively, and a plurality of venting holes H may be positioned between them. In this case, a venting path configured to allow the discharges to flow may be formed between the plurality of first units 301 and the plurality of second units 302, which are spaced apart from each other.

The venting path may be formed among the pack case 200, the blocking unit 300, and the module case 130. That is, the venting path may be formed on the inner side of the blocking unit 300. The venting path may be configured to extend in the front-back direction such as the direction in which the plurality of first units 301 and the plurality of second units 302 extend.

In particular, the blocking unit 300 may be configured to extend from one end of a stack of battery modules 100 to the other end. In this case, the blocking unit 300 may be configured to block the movement of the discharges to another venting path in the left-right direction of the battery pack 1. In addition, the blocking unit 300 may be configured to guide the discharges flowing through the venting path in the front-back direction of the battery pack 1.

According to the above-implemented configuration of the present disclosure, the blocking unit 300 may guide the discharges flowing through the venting path in one direction to smoothly discharge it to the outside of the pack case 200.

In addition, referring to FIG. 8, the pack case 200 may include a venting unit 250. The venting unit 250 may be configured to discharge the discharge substances generated from the battery module 100 to the outside of the pack case 200. The venting unit 250 may be configured in the form of a hole leading from the inside to the outside of the pack case 200. Alternatively, the venting unit 250 may be provided in the form of a venting device configured to be mountable in the hole of the pack case 200 and to operate when the discharges are generated inside the pack case 200.

The venting unit 250 may be provided on the side of the pack case 200, i.e., on the side frame 220. A plurality of venting units 250 may be provided. The venting unit 250 may be located on at least some of the multiple unit walls of the side frame 220. In addition, one venting unit 250 may be formed on each of two or more unit walls, or two or more venting units 210 may be formed on one unit wall. For example, referring to the example illustrated in FIG. 8, one venting unit 250 may be provided on each of the front wall and the rear wall. In addition, the plurality of venting units 250 may be provided to be symmetrical to each other relative to the central axis of the side frame 220.

According to the above-implemented configuration of the present disclosure, high-temperature gas or the like may be discharged in both directions of the pack case 200 in an abnormal state of the battery cell 110, so it is easy to discharge the gas more quickly to the outside of the pack case 200.

Meanwhile, the number of installations or locations of the venting units 250 described in the embodiment in FIG. 8 or the like are only examples, and may be changed to other values and locations.

According to an embodiment of the present disclosure, the blocking unit 300 may be configured to guide the discharges to the venting unit 250. For example, the blocking unit 300 may be configured to extend toward the venting unit 250. Accordingly, the discharges, such as the venting gas, moving through the venting path between the blocking units 300 may be directed toward the venting unit 250. In this case, according to an embodiment of the present disclosure, as disclosed in the embodiment illustrated in FIG. 8, a plurality of first units 301 and a plurality of second units 302 may be provided parallel to each other so that the interval between the plurality of first units 301 and the plurality of second units 302 may be maintained constant.

According to the above-implemented configuration of the present disclosure, when a thermal event occurs in the battery module 100, the blocking unit 300 may guide the discharges inside the venting path toward the venting unit 250, thereby quickly discharging the discharges to the outside of the pack case 200. Therefore, it is possible to prevent the internal pressure of the pack case 200 from increasing and prevent additional chain ignition of other battery modules 100.

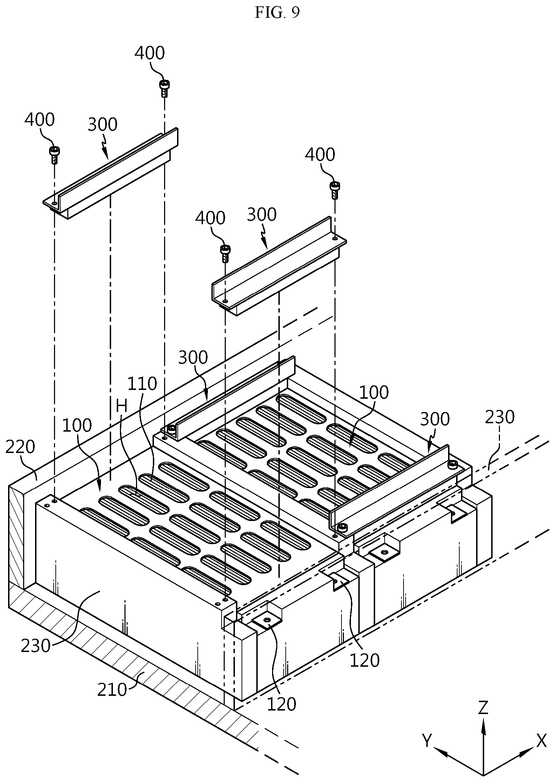

FIG. 9 is a drawing illustrating a combined structure of a blocking unit and a pack case included in a battery pack according to an embodiment of the present disclosure.

The pack case 200 may further include a cross-beam 230. The cross-beam 230 may be configured to partition the battery modules 100 arranged along the horizontal direction. For example, the cross-beam 230 may be connection in the form of a partition that extends in the front-back direction or the left-right direction, and may be interposed between adjacent battery modules 100. The cross-beam 230 may be provided to protrude further upward than the battery module 100. According to this implemented configuration, heat or flame may be prevented from directly flowing between the battery modules 100 stored in the storage spaces separated by the cross-beam 230 inside the pack case 200.

Referring to FIG. 9, the blocking unit 300 may be configured to be coupled to the cross-beam 230. In particular, the blocking unit 300 may be coupled to the upper end of the cross-beam 230. Specifically, the blocking unit 300 may be seated on the cross-beam 230 so that the blocking unit 300 and the cross-beam 230 may be coupled and fixed to each other by a connection member, such as a bolt, connected from above the blocking unit 300.

According to the above-implemented configuration of the present disclosure, a connection and fixation configuration between the blocking unit 300 and the pack case 200 may be obtained by a simple structure. Therefore, the assemblability of the battery pack 1 may be improved, and the time and cost for manufacturing the battery pack 1 may be reduced, thereby improving productivity. In addition, since the blocking unit 300 is stably fixed between the cross-beam 230 and the pack lid 250, the rigidity of the battery pack 1 may be further secured.

Furthermore, according to an embodiment of the present disclosure, the blocking unit 300 may be manufactured in a form in which it is pre-fixed to the module case 130. In this case, when the battery module 100 is installed in the pack case 200, the blocking unit 300 may be automatically coupled to the cross-beam 230.

In addition, the cross-beam 230 may be provided to be spaced apart from the pack lid 240 by a predetermined distance, and the venting gas may move through the space between the pack lid 240 and the cross-beam 230. However, according to the above-implemented configuration of the present disclosure, since the blocking unit 300 is provided in the space between the cross-beam 230 and the pack lid 240, the thermal propagation to other adjacent battery modules 100 due to the venting gas or flame may be more effectively suppressed.

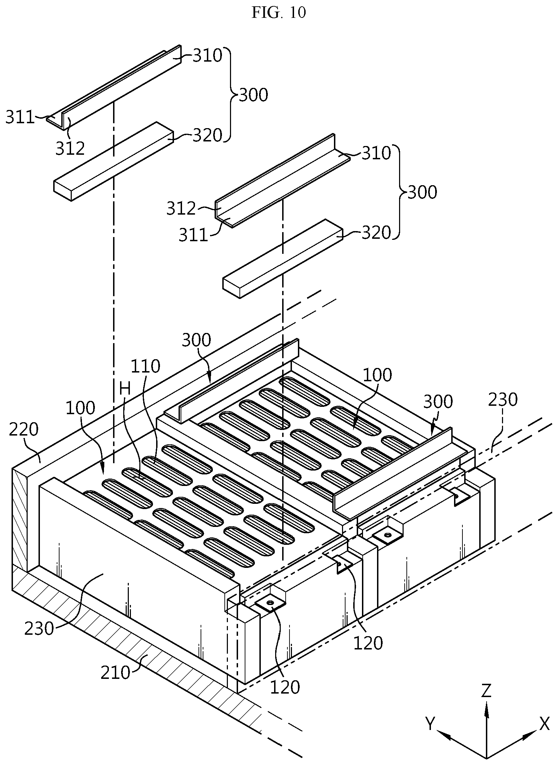

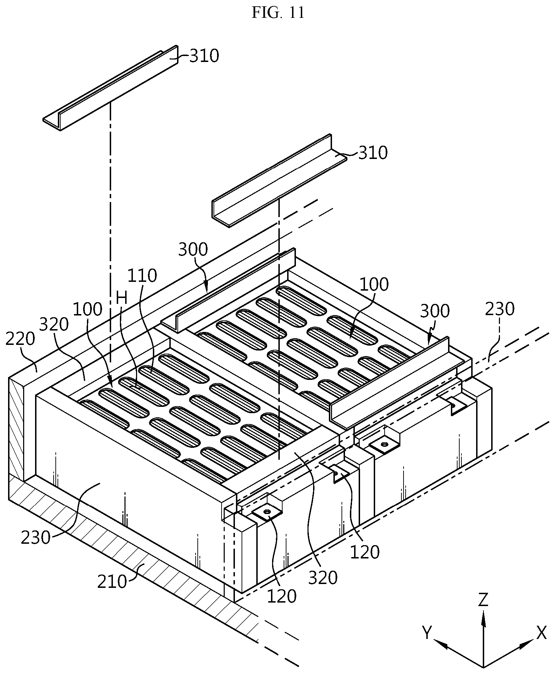

FIG. 10 is a drawing illustrating a structure of a blocking unit included in a battery pack according to an embodiment of the present disclosure, and FIG. 11 is a partially exploded perspective view of a battery pack according to an embodiment of the present disclosure.

The configuration of the blocking unit 300 will be described in detail with reference to FIGS. 10 and 11. The blocking unit 300 may include an outer member 310 and an inner member 320. The outer member 310 may be provided outside the battery module 100. The outer member 310 may be configured to be coupled to the pack case 200. For example, the outer member 310 may be configured to be coupled to the top of the cross-beam 230. The outer member 310 may be configured to be spaced apart from the battery module 100 by a predetermined distance.

The outer member 310 may be configured in a bent shape. The outer member 310 may be configured by bending a single plate once. The outer member 310 may be configured in an L-shape.

Specifically, the outer member 310 may have a horizontal portion 311 and a vertical portion 312. The horizontal portion 311 may be a portion that extends in the horizontal direction and is coupled to the cross-beam 230. In addition, the vertical portion 312 may be configured to block the movement of venting gas between the battery modules 100. In addition, the vertical portion 312 may be configured to support the pack lid 240 when the upper part of the module case 130 expands.

The outer member 310 may be configured to be bent toward the inside of the battery module 100. That is, the outer member 310 may be bent in a form in which the vertical portion 312 is positioned further inward than the horizontal portion 311.

According to the above-implemented configuration of the present disclosure, since a device for electrical connection, such as an electrode terminal 120, is provided on the outer side of the battery module 100, in particular, on the front side thereof, an insulating distance from such a device may be secured. In addition, according to the above-implemented configuration of the present disclosure, it is possible to minimize the movement of heat such as venting gas or flame generated from the inner side of the outer member 310 toward the electrode terminal 120.

The inner member 320 may be provided on the inner side of the outer member 310. The inner member 320 may be provided between the outer member 310 and the battery module 100. For example, as disclosed in the embodiments illustrated in FIGS. 10 and 11, the outer member 310 and the inner member 320 may be disposed in the vertical direction.

In addition, the outer member 310 and the inner member 320 may be made of different materials from each other. For example, the outer member 310 may be made of a metal material such as SUS or aluminum.

In particular, the inner member 320 may be made of a compressible material such as silicone or polyurethane. Accordingly, the inner member 320 may be configured to be interposed between the outer member 310 and the battery module 100 in a compressed state. In this case, the horizontal portion 311 of the outer member 310 may be configured to press the inner member 320 toward the battery module 100.

In addition, the inner member 320 may be provided on the inner side of the cross-beam 230. That is, the inner member 320 may be provided between adjacent cross-beams 230 so that both ends are in close contact with the cross-beams 230. In this case, the height of the inner member 320 may be configured to be approximately the same as the difference between the height of the cross-beam 230 and the height of the battery module 100.

According to the above-implemented configuration of the present disclosure, when the outer member 310 is coupled to the cross-beam 230, since the inner member 320 is provided in a compressed state on the inner side of the outer member 310, the bonding strength or assemblability between the outer member 310 and the cross-beam 230 may be secured. In addition, according to the above-implemented configuration of the present disclosure, the space between the outer member 310 and the battery module 100 may be sealed, so the movement of heat due to venting gas or flame to another battery module 100 through the space between the outer member 310 and the battery module 100 may be suppressed. As a result, according to the above-implemented configuration of the present disclosure, thermal propagation between the battery modules 100 may be prevented.

In addition, the inner members 320 may be provided as a pair for each battery module 100. A pair of inner members 320 may be disposed on both sides of the battery module 100 in its longitudinal direction.

According to the above-implemented configuration of the present disclosure, it is possible to more reliably block the movement of venting gas or the like to the electrode terminal 120 or another adjacent battery module 100 through the space between the outer member 310 and the battery module 100.

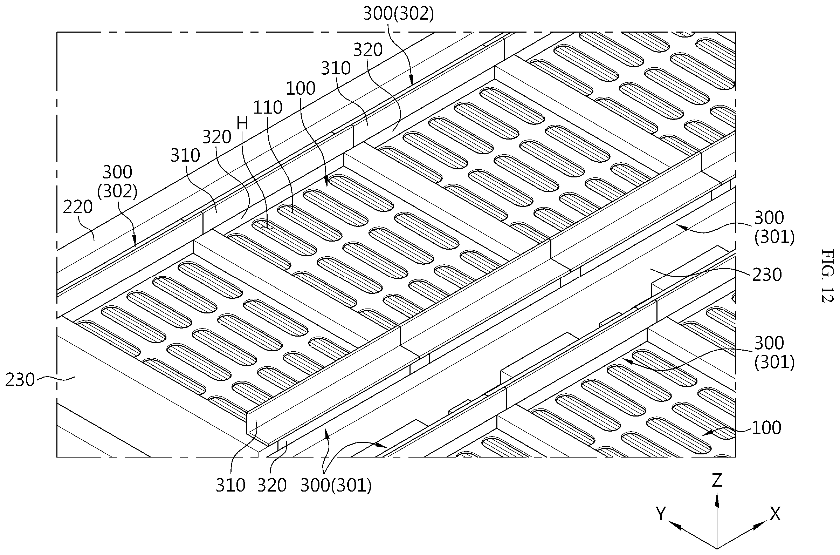

FIG. 12 is a perspective view illustrating the inside of a battery pack according to an embodiment of the present disclosure.

As an embodiment, as shown in FIG. 12, a plurality of outer members 310 may be provided. Each of the plurality of outer members 310 may be configured to extend in the widthwise direction of the battery module 100. The outer member 310 may be configured to be approximately equal to the width of the battery module 100. Each of the plurality of outer members 310 may be configured such that both ends are connected to adjacent cross-beams 230.

In this case, the plurality of outer members 310 may be configured to be connected to each other. That is, a plurality of outer members 310 of a first unit 301 and a plurality of outer members 310 of a second unit 302 may be arranged in a single row, respectively. For example, the plurality of outer members 310 may be coupled to each other by welding or adhesive materials. In addition, a sealing material may be provided on the surface of the outer member 310 to seal the gap between adjacent outer members 310.

According to the above-implemented configuration of the present disclosure, the respective blocking units 300 may be assembled into the battery module 100 to manufacture the battery module 100 as a unit. Accordingly, the battery module 100 may be disposed in the pack case 200 so that the blocking unit 300 may be naturally coupled to the cross-beam 230. Accordingly, according to the above-implemented configuration of the present disclosure, the assemblability and productivity may be improved when manufacturing the battery module 100 and/or the battery pack 1.

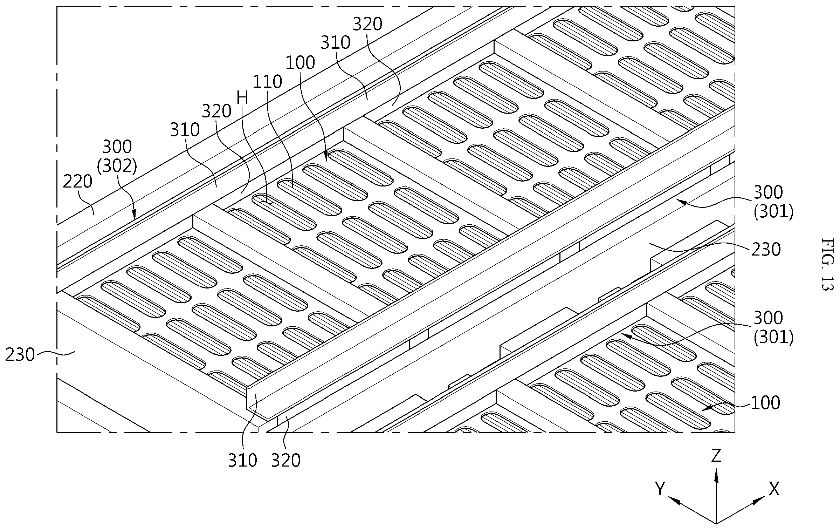

FIG. 13 is a perspective view illustrating the inside of a battery pack according to another embodiment of the present disclosure.

As another embodiment, as shown in FIG. 13, the outer member 310 may be configured in a straight shape so as to be provided on the outer side of the battery modules 100 arranged in a row. The outer member 310 may be disposed to extend along the front-back direction of the pack case 200. The longitudinal both ends of the outer member 310 may be configured to be coupled to the cross-beams 230 provided on both outermost sides of the pack case 200.

According to the above-implemented configuration of the present disclosure, since the outer member 310 is configured to cross a plurality of battery modules 100, movement of venting gas or flame to other battery modules 100 may be more reliably blocked. In addition, according to the above-implemented configuration of the present disclosure, since the process is simplified compared to the case where a plurality of outer members 310 are provided for each battery module 100, productivity may be improved when manufacturing a battery pack 1.

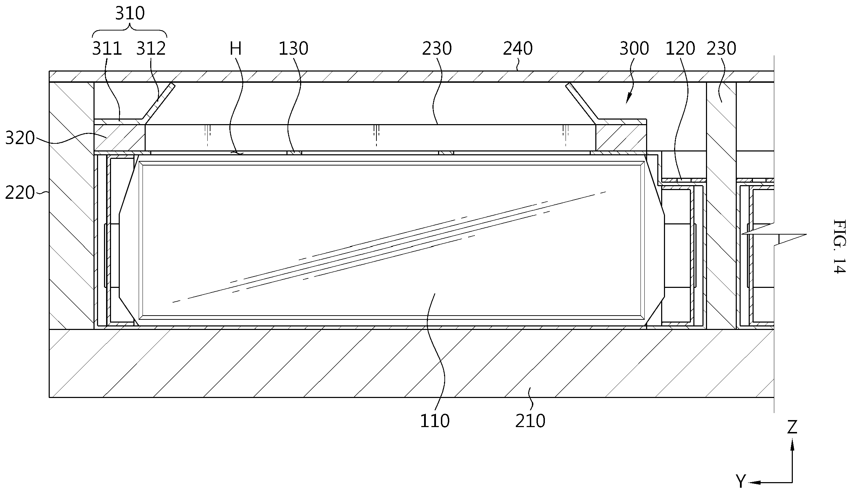

FIG. 14 is a cross-sectional view of a battery pack according to another embodiment of the present disclosure.

As another embodiment, as illustrated in FIG. 14, the outer member 310 may be configured in a form in which the vertical portion 312 is inclined toward the inside of the battery module 100. That is, the horizontal portion 311 and the vertical portion 312 may be configured to form an obtuse angle. In addition, the vertical portion 312 may be configured to come into contact with the pack lid 240 in a diagonal shape.

According to the above-implemented configuration of the present disclosure, the vertical portion 312 may be prevented from being pushed outward from the battery module 100 by the pressure of venting gas or flame inside the venting path. In addition, the sealing force between the pack lid 240 and the blocking unit 300 may be improved. As a result, according to the above-implemented configuration of the present disclosure, the venting gas or the like may be further prevented from flowing to the front and rear sides of the battery module 100 in the venting path.

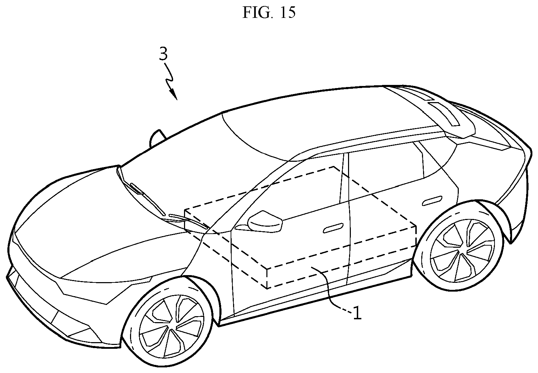

FIG. 15 is a schematic perspective view of a vehicle including a battery pack according to an embodiment of the present disclosure.

Referring to FIG. 15, a vehicle 3 according to an embodiment of the present disclosure may include one or more battery packs 1 according to an embodiment of the present disclosure. The vehicle 3 according to the present disclosure may be, for example, an electric vehicle, a hybrid vehicle, or a plug-in hybrid vehicle. The vehicle 3 may include a four-wheel vehicle and a two-wheel vehicle. The vehicle 3 may operate by power supplied from a battery pack 1 according to an embodiment of the present disclosure.

As described above, although the present disclosure has been described with reference to limited embodiments and drawings, the present disclosure is not limited thereto, and various modifications and variations are possible without departing from the technical idea of the present disclosure and the scope of equivalence of the claims to be described below by those skilled in the art to which the present disclosure pertains.

## Claims

1. A battery pack comprising:
a plurality of battery modules having a plurality of battery cells;
a pack case configured to store the plurality of battery modules; and
a blocking unit provided between the battery module and the pack case and configured to block movement of venting gas discharged from the battery cells toward one or more other battery modules.

2. The battery pack according to claim 1,
wherein the battery module comprises
an electrode terminal provided on its front surface and configured to be electrically connected to the battery cells, and
wherein the blocking unit is configured to suppress movement of the venting gas toward the electrode terminal.

3. The battery pack according to claim 1,
wherein the battery module comprises
a module case configured to store the plurality of battery cells and having a venting hole formed on its one side.

4. The battery pack according to claim 3,
wherein the blocking unit is provided in a space between an upper side of the pack case and the module case.

5. The battery pack according to claim 3,
wherein the blocking unit
is configured to suppress upward movement of the module case from above the module case.

6. The battery pack according to claim 1,
wherein the blocking unit is configured to come into contact with an inner surface of the pack case.

7. The battery pack according to claim 1,
wherein the blocking unit
is configured to extend in a widthwise direction of the battery module.

8. The battery pack according to claim 1,
wherein the blocking unit comprises a first unit and a second unit respectively located on both sides of the battery module.

9. The battery pack according to claim 1,
wherein the pack case comprises
a cross-beam interposed between adjacent battery modules and configured to extend further upward than the battery module.

10. The battery pack according to claim 9,
wherein the blocking unit is coupled to an upper end of the cross-beam.

11. The battery pack according to claim 1,
wherein the blocking unit comprises
an outer member provided on an outer side of the battery module and configured to be coupled to the pack case, and
an inner member provided between the outer member and the battery module.

12. The battery pack according to claim 11,
wherein the outer member is configured in a bent shape to have a horizontal portion and a vertical portion.

13. The battery pack according to claim 11,
wherein the inner member is configured to be interposed between the outer member and the battery module in a compressed state.

14. The battery pack according to claim 11,
wherein the inner members are provided as a pair for each battery module and are disposed on both sides of the battery module in its longitudinal direction.

15. A vehicle comprising a battery pack according to any one of claims 1 to 14.
